# EUROPEAN PATENT SPECIFICATION

(11) **EP 1 493 994 B1**
(45) Date of publication and mention of the grant of the patent: **22.08.2007**
(21) Application number: 03014874.6
(22) Date of filing: 30.06.2003
(51) Int. Cl.: G01C 21/36

(54) **Car navigation system**
Fahrzeugnavigationssystem
Système de navigation pour véhicule

(43) Date of publication of application: 05.01.2005
(73) Proprietor: Harman Becker Automotive Systems GmbH, 76307 Karlsbad (DE)
(72) Inventor: Schoepp, Harald, 76275 Ettlingen (DE)
(74) Representative: Grünecker, Kinkeldey, Stockmair & Schwanhäusser Anwaltssozietät

(56) References cited:
- EP-A- 1 308 695
- US-B1- 6 556 917

## Description

The present invention relates to a car navigation system and a method for providing navigation information. In particular, the present invention relates to a transmission of navigation information to a display device by a car navigation system.

Car navigation systems are well known as apparatus for providing navigation information to the driver of a vehicle guiding the driver to an intended destination. In such systems, a position detecting means obtains the information relating to the position of the vehicle. Such a position detecting means may comprise a GPS (Global Positioning System) receiver for obtaining the current local position information of the vehicle based on GPS signals received from satellites. Such information is processed in a navigation processor of the navigation system in order to obtain corresponding map data covering the surrounding area of the vehicle's present position. Map data are stored in memory means such like a CD-ROM, a DVD, etc. Image data for reproduction on the driver's display device is generated by the navigation processor on the basis of stored map data and is transmitted to a display device.

The navigation processor may also provide an optimum route for travelling from a predetermined departure point to a predetermined destination point. The navigation processor calculates the advancing direction of the vehicle when approaching an intersection based on the route calculated on the present locational information.

The directional information for instructing the driver may be generated in form of a voice data reproduced through a speaker or, alternatively by means of directional instruction displayed on the display device.

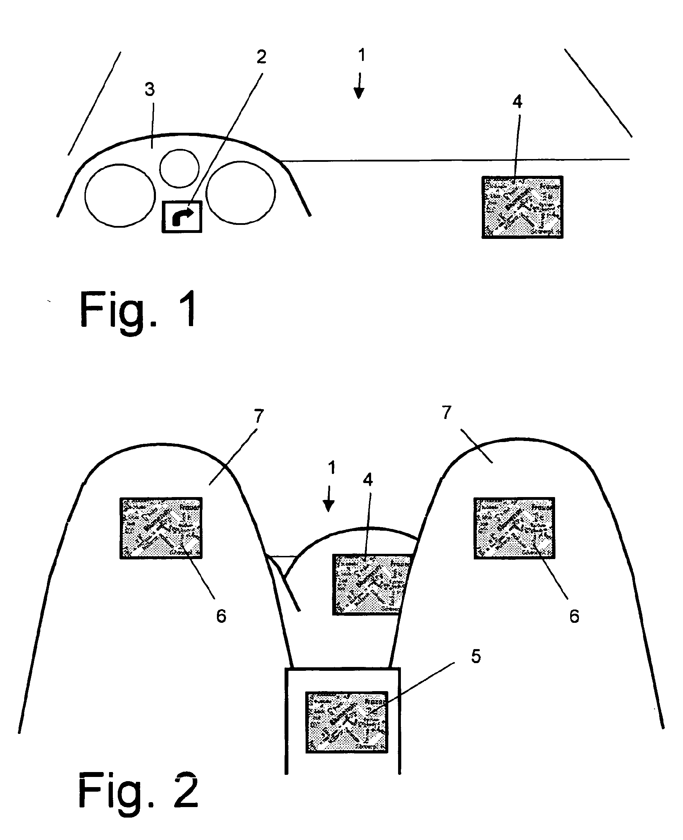

A display device for providing map data or directional commands is illustrated in Fig. 1. The display device is mounted on the vehicle's dashboard 1 and may be either incorporated into the vehicle's instrument panel 3 in form of a display 2 or mounted separately as a display device 4. The vehicle's dashboard may simultaneously comprise both display devices 2, 4 providing navigation information of different information degrees, i.e. directional instructions on the smaller display device 2 and additional and/or more detailed information on the second display device 4.

Display devices may not only be provided for the front-seat passengers but as well for the rear-seat passengers. As illustrated in Fig. 2, such display devices may either be provided in form of a single display device 5 for rear seat passengers, preferably arranged between the seats of the front-seat passengers, or in form of separate devices 6 mounted at the back of the front-seats.

Display devices 2, 4, 5, 6 may be conventional CRTs or, in an increasing manner, flat and compact liquid crystal displays (LCD) or plasma displays. These displays may also be used as a GUI (Graphical User Interface) terminal for controlling the navigation or other systems embedded in cars, for instance on-board TV receivers, mobile phone units, etc.

Display devices are preferably combined with input or operating units for inputting data to the navigation system, e.g. the driver may select a preferred destination point or other map data. The operating unit is preferably realized in form of touch pads overlaid over the display screen or keys arranged next to the display screen. Each touch pad or key is preferably a function key, i.e. different functionalities can be assigned to the keys depending on the current display and/or operation mode.

For instance, the user may select scroll or zoom functions for selecting an appropriate portion of the map data to be displayed on the screen.

The data to be displayed on the display device are conventionally transferred in form of RGB or YUV data from the navigation processor to the display device. Such analog transmission of video data requires dedicated video lines connecting the navigation processor and the display device.

According to another conventional approach the navigation processor transmits digital data to the display device to be converted at the display device into image data for display purposes. The conversion is accomplished by a graphic processor provided at the display device. The graphic processor converts image generation instruction information received from the navigation processor into image data to be displayed. The transmission of navigation information in form of image generation instruction information from the navigation processor to the display device reduces the amount of data to be transmitted on the communication link therebetween.

One problem of such prior art systems is that the graphic processor at the display device for converting the received image generation instructions into a image data needs to provide more and more processing capacity as demands for quality and complexity of the displayed image/navigation information is continuously increasing. Thus, it is in particular desirable to lower hardware complexity and hardware effort which is required by display devices in vehicles.

A vehicle-mounted display system for displaying video data on a front-seat display and back-seat display in the vehicle is known from EP-A-1 308 695. Two different kinds of video data may be displayed individually or in combination on each of the display devices. The first kind of video data relates to a navigation data representing a map which indicates the current vehicle position therein. This kind of video data is preferably provided to the front-seat display only, but may also be superimposed on the back-seat display. The second kind of video data is a TV broadcast program or a reproduction from an optical recording medium. This kind of data is intended for display on the back-seat display only, but may also be superimposed on the front-seat display. Both kinds of video data are transmitted from a memory or AV decoder in form of individual video images.

US-B-6,566,917 describes a vehicle navigation device for obtaining navigation data from a memory and display of the obtained navigation data either in perspective form or two-dimensional form on a display device. A navigation device is further connected to a transceiver for receiving video data to be displayed on a display device. The data to be displayed is obtained from the memory or transceiver in form MPEG 4 data which are decoded for display on the display device.

In view of these prior art drawbacks, it is the object of the present invention to provide a method and a car navigation system for providing navigation information on a display device wherein the method and the car navigation system reduce the required hardware effort and complexity of the display device.

This is achieved by a method as set forth in claim 1 and by a car navigation system as set forth in claim 16.

It is the particular advantage of the present invention that display devices do not need to be equipped with a graphic processor for converting image generation instructions into image data. Today's display devices mounted in vehicles are adapted for use with entertainment systems, meaning that such display devices include decoder means for decoding and displaying video data, in particular for use with an on-board TV receiver or DVD player. By transmitting navigation information in form of standardized video format the present invention takes advantage of this development and eliminates the need for installing an additional graphic processor at the display device. In addition, interoperability between vehicle information and entertainment components designed by different manufacturers is consequently achieved.

The navigation information intended for display on a display device is encoded by the navigation processor. The encoded image data may be one or a combination of the following kinds of data, for instance map data, user interaction information, directional instructions, video information (still or moving images) of the current environment or any desired destination point or point of interest along the travelling route, etc. The navigation system subjects all image data to be displayed to a video encoding procedure converting the navigation information into video data of a standardized format before being sent to the display device. The transmission can thus be accomplished in a standardised manner from the navigation processor to the display device.

According to another preferred embodiment, the car navigation system comprises a memory, for instance in form of a record carrier, having stored thereon data (in particular map data) as video data in accordance with a standardised video format. Such video data may be stored, read out and transmitted in the standardized video format from the record carrier. By replacing a particular map data format of a manufacturer and using a standardized video format, the memory components be replaced by commercially available and less expensive products.

Preferably, such record carriers are a CD-ROM, a DVD or a flash memory. Such commercially available record carriers are intended for storing video data and are in widespread use therefore.

According to another embodiment, the car navigation system may further comprise a data receiver receiving video data in accordance with a standardised video format. Standardised video data receivers can be employed for this purpose which are in widespread use.

Preferably, the data are received from a wireless communication link, in particular by making use of a standardized mobile telecommunication standard such like UMTS (or GPRS, EDGE, etc.). A transmission of navigation information in form of video data according to a standardized video standard facilitates the integration of a car navigation system into existing mobile communication networks for providing a driver with up-to-date navigation information at any time.

According to a preferred embodiment, in particular for transmitting video data in that form as it is stored in the memory or received from a service provider, these video data are retrieved from the memory or service provider and transmitted to the display device. The retrieved video data are forwarded directly to the display device without subjecting the retrieved data to any further decoding or subsequent encoding.

According to a preferred embodiment, the navigation information is transmitted to said display device over a vehicle communication network connected to said navigation processor and said display device. Accordingly, a transmission of navigation information is easily accomplished on existing vehicle entertainment networks such that the hardware effort and the costs for the car navigation equipment are considerably reduced.

Preferably, such a vehicle communication network is in accordance with the MOST standard. The MOST vehicle communication network is already available on a plurality of vehicles and a transmission of additional video data for navigation purposes can be easily implemented thereon.

Preferably, the navigation information is transmitted in accordance with one of the MPEG video data formats, one of the H.26x video data formats or one of the JPEG data formats. Such data formats are in widespread use and, consequently, currently available display devices are already adapted for display of video data transmitted in accordance with such data formats.

According to a preferred embodiment, the navigation processor is adapted to transmit navigation information in any of a plurality of predefined standardized video formats. The navigation processor may then be combined with display devices capable to only display video data in accordance with a single video standard.

Further preferred embodiments of the present invention are the subject-matter of dependent claims.

Additional features and advantages of the present invention will become apparent from the following description of the invention as illustrated in the drawings, wherein
- Fig. 1: schematically illustrates display devices mounted on a vehicle dashboard;
- Fig. 2: schematically illustrates other alternative display configurations;
- Fig. 3: schematically illustrates in a block diagrammatical form the configuration of a car navigation system in accordance with the present invention; and
- Fig. 4: schematically illustrates the processing and transmission of video data by the car navigation system of Fig. 3.

The illustrative embodiments of the present invention will now be described with reference to the drawings.

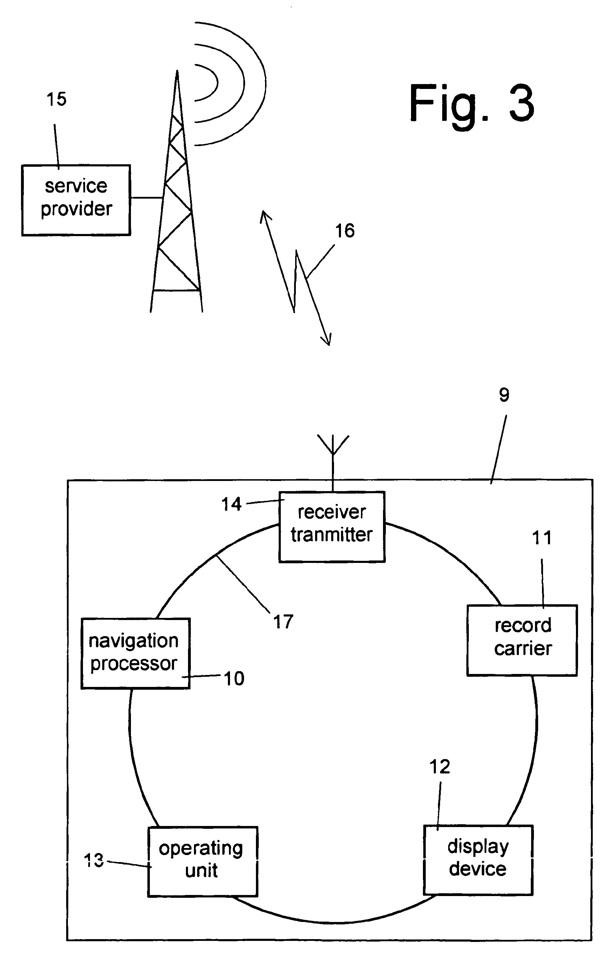

Referring to Fig. 3, the configuration of a car navigation system in accordance with the present invention is illustrated. The car navigation system generally denoted by reference numeral 9 comprises a navigation processor 10 for providing the main car navigation functionalities. Navigation processor 10 is connected to an operating unit 13 receiving user instructions for controlling the navigation operation. Further, navigation processor 10 is connected to a display device 12 for display of navigation information to the driver or other vehicle passengers.

Car navigation processor 10 retrieves navigation information, e.g. map data or video data, to be displayed on the display device 12 from record carrier 11. Record carrier 11 is preferably a CD-ROM, a DVD, a flash memory or a hard disk drive.

According to a preferred embodiment, the car navigation system 9 may additionally comprise a receiver 14. Receiver 14 is connected to an antenna for receiving information transmitted in a wireless manner from service provider 15 on a communication link 16. Such service providers 15 may provide information in relation to the current vehicle position or up-to-date map data information for the driver. A driver may rely upon the transmission of additional information when travelling in areas where no map data is available from the vehicle's own storage device(s), in particular its record carrier 11.

The transmission of additional map data or navigation from the service provider 15 to the car navigation system 9 is preferably performed in accordance with a mobile telecommunication standard such like UMTS, GPRS or EDGE. These mobile telecommunication standards are adapted for high data rates to be transmitted to a mobile receiver. UMTS (Universal Mobile Telecommunication Standard) is intended to replace the current GSM mobile telecommunication system and enabling the transmission of higher data rates. The present GSM system enables higher data transmission rates by employing transmission standards like GPRS (General Packet Radio Services) or EDGE (Enhanced Data Rates for GSM Evolution). These standardised transmission formats allow up to three times higher throughputs compared to GSM using the same bandwidth.

Receiver 14 might also be adapted to receive additional information from a broadcasting network such like future DVB (Digital Video Broadcasting) and/or DAB (Digital Audio Broadcasting) networks. DVB and DAB are intended for future broadcast of video data. Map data may be transmitted on a particular broadcast channel wherein either individual data may be transmitted in a customized manner upon the driver's request or predefined map data are broadcast in a repetitive manner. A broadcast of map data is preferably based on a predefined accounting scheme.

Receiver (14) may further comprise a transmission unit which may transmit drivers requests to the service provider 15.

The data stored on the record carrier 11 or transmitted via wireless communication link 16 are preferable in a data format in accordance with one of the existing video coding standards. The use of existing video coding standards for navigation information enables the use of standardized video processing equipment and storage devices in car navigation systems. In particular, interoperability between components of a car navigation system designed by different manufacturers is thus achieved.

Video coding standards have been standardised by two international organisations, namely the International Telecommunication Union (ITU-T) and the International Standardisation Organisation/International Electrotechnical Commission (ISO-IEC). The ITU-T coding standards are called recommendations and denoted with H.26x (H.261, H.262, H.263 and H.264). The ISO/IEC standards are denoted with MPEG-x (MPEG-1, MPEG-2, MPEG-4 and MPEG-7).

These video coding standards have been designed for real time video communication applications and address the needs of video storage, broadcast video and video streaming applications.

The MPEG formats are by far the most popular standards. The abbreviation MPEG stands for "Motion Picture Experts Group". The video coding standard MPEG-1 was released in 1993 with the objective of achieving acceptable frame rates and the best possible image quality for moving images with a low band width in the range of 1 to 1.5 MBit/s. In 1995, video coding standard MPEG-2 has been released. Its basic structure is the same as that of MPEG-1, however it allows data rates up to 100 MBit/s. It is originally intended for digital TV, video films on DVD-ROMs and professional video studios. The video coding standard MPEG-2 allows a scaling of the resolution and data rate over a wide range. MPEG-4's objective is to get the highest video quality possible for extremely low data rates in the range between 10 KBit/s and 1 KBit/s. Additionally, MPEG-4 provides an organisation of the image contents into independent objects in order to be able to address or process image objects individually. The latest MPEG family project is MPEG-7. MPEG-7 is a standard to describe multimedia data.

The ITU-T standards are generally based on the same coding principles, but aim at slightly different application areas.

An intermediate video format which may be used for encoding and transmission of navigation information is MJPEG video standard. This abbreviation stands for "Motion JPEG". This format is practically an intermediate step between a still image coding standard like JPEG and a video format like MPEG as an MJPEG sequence consists of a plurality of JPEG images. This standard allows fast access to each individual image as an individual access does not depend on a previously decoded neighbouring image.

A video format widely used for encoding still images is the JPEG coding standard. JPEG stands for "Joint Photographic Experts Group". While JPEG is a lossy compression technique removing extraneous image data, JPEG-LS is a lossless compression technique. JPEG 2000 is a new image coding system based on wavelet technology. Other video data formats relating to a lossless coding of individual images which might be used for this purpose are the bitmap compression (BMP) and the GIF compression.

As those skilled in the art will appreciate, the video data formats used for transmitting data for display on the display device are not limited to those explicitly mentioned above. Any other video data format appropriate for this purpose may be employed to the same effect.

Individual still images may be incorporated by the navigation processor into a stream of navigation information generated by the navigation processor. These image data are obtained from the record carrier 11 or from the service provider 15. Such image data are inserted into the video stream sent towards the display device 12 preferably by maintaining the data format in which the video data were obtained, for instance those still image video data formats mentioned above.

Alternatively, the obtained still image information is decoded and encoded by the navigation processor. To adapt the obtained information to the display's capabilities, the encoding may be performed in accordance with a particular video coding standard needed by the display device 12. Such a decoding and encoding procedure may be abbreviated by employing a transcoding technique for transforming the still image data from the obtained video data format into the required encoding video data format.

Corresponding decoding, encoding or transcoding operations are applied to video sequences (i.e. video clips) obtained from record carrier 11 or service provider 15 for transmission to the display device 12. Or alternatively, the obtained video sequences are directly transmitted to the display device 12 for being displayed thereon without being subjected to any further decoding or encoding by the navigation processor 10.

The navigation information may comprise individual images and video clips inserted into a stream of data generated by the navigation processor. Such inserted individual images or image sequences may represent travel information or information relating to particular points of interest along the travelling route of the vehicle.

The navigation processor retrieves map data either from the record carrier 11 of the navigation system 9 or directly from service provider 15 via wireless communication link 16. For navigation purposes or for providing additional travel information to the driver, particular map data and/or video images or sequences are retrieved from the stored or received data, processed by navigation processor 10 and applied to display device 12. The data output by the navigation processor and transmitted to display device 12 are in a data format in accordance with one of the above described video coding standards.

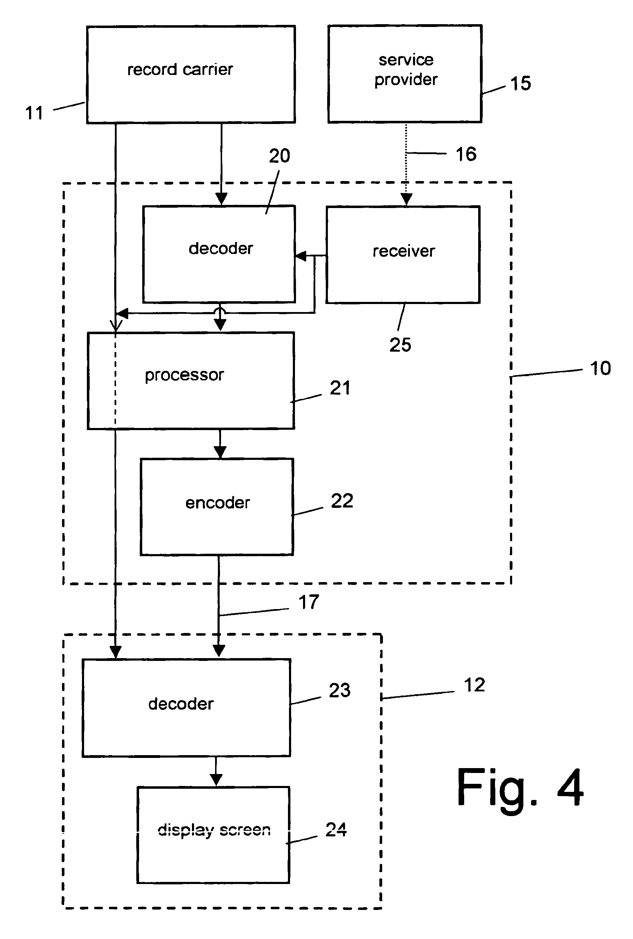

The resulting processing chain of map data is illustrated in Fig. 4. Each of the display devices 12 which are distributed within the vehicle is equipped with an individual decoding device 23 for decoding the video data transmitted from navigation processor 10 for display on display screen 24.

The display data sent over the vehicle entertainment and information communication network 17 have been output by navigation processor 10 in the predefined data format. For this purpose, navigation processor 10 comprises encoding means 22 for converting the data generated by processor 21 into the predefined data format.

The processing operation of navigation processor 21 is mainly based on input data retrieved from record carrier 11 or from the wireless communication link 16. For processing and altering the received data by processor 21, the navigation processor 10 further comprises a decoding device 20 for converting the received data into 2-dimensional image data suited for image processing. Navigation processor 10 may thus process any kind of input and output (video) data format combinations.

Alternatively, the video information obtained from record carrier 11 and/or service provider 15 is selected by processor 21 and forwarded to the display device 12 without having the video data decoded and encoded as described in connection with the previous embodiment.

Preferably, the data are transmitted based on a MOST communication network, Alternatively, similar communication networks like D2B-optical or IEEE 1394 standards may be used for this purpose with the same effect.

Data communication on a MOST bus or network is based on predefined frames including a synchronous area and an asynchronous area. The synchronous and asynchronous areas of a frame may have an arbitrary length. The MOST standard also defines an asynchronous packet-transfer mechanism.

Each MOST frame contains 512 bits and is divided into three separate portions. A first portion having a length of one byte is intended for synchronization administration of the frames. A second portion contains the data to be transmitted, and a last portion having a length of one byte enables a detection of transmission errors. 62 bytes remain for data transmission per frame. This data area may be divided into three different segments intended for transmission of different types of data, namely synchronized data, asynchronous data, and control and status data.

The IEEE 1394 bus is a serial bus for transporting all types of digital data. The data are transmitted either in a asynchronous transmission mode or an isynchronous transmission mode. The isynchronous mode guarantees a real-time transmission of multimedia data streams.

Summarising, the present invention relates to car navigation systems which transmit navigation information to a display device in form of video data wherein the video data are in accordance with a standardised video format.

## Claims

1. A method for providing navigation information on a display device (12) of a vehicle, said method generating navigation information, transmitting said navigation information to said display device (12) and displaying said navigation information on said display device (12), said transmitting step transmits said navigation information in form of video data in accordance with a standardized video format,
**characterized in that**
said step of generating said navigation information comprises the step of encoding the navigation information for transmission to said display device (12), said encoding step generating encoded navigation information in form of video data in accordance with said standardized video format; and by further comprising the step of
decoding the navigation information received at said display device (12) before being displayed on said display device (12).

2. A method according to claim 1, further comprising the step of storing predetermined encoded navigation information in a memory in advance and said step of generating said navigation information comprises the step of retrieving encoded navigation information from said memory, said stored encoded navigation information being in form of video data in accordance with a standardized video format.

3. A method according to claim 2, wherein said retrieved navigation information being transmitted to said display device (12).

4. A method according to claim 2 or 3, wherein said memory being a record carrier (11).

5. A method according to claim 4, wherein said record carrier (11) being a DVD, a CD-ROM, or a Flash-memory.

6. A method according to any of claims 1 to 5, further comprising the steps of
transmitting and receiving encoded navigation information, said encoded navigation information being in form of video data in accordance with a standardized video format, wherein said step of generating said navigation information comprises the step of retrieving encoded navigation information from said received navigation information.

7. A method according to claim 6, wherein said encoded navigation information being transmitted by a service provider (15).

8. A method according to claim 6 or 7, wherein said encoded navigation information being transmitted on a wireless communication link (16).

9. A method according to claim 8, wherein said encoded navigation information being transmitted on said wireless communication link (16) in accordance with an standardized mobile communication standard.

10. A method according to claim 9, wherein said standardized mobile communication standard being the UMTS standard.

11. A method according to any of claims 1 to 10, wherein said encoded navigation information being transmitted to said display device (12) on a vehicle communication network (17).

12. A method according to claim 11, wherein said vehicle communication network (17) being in accordance with the MOST standard or the IEEE1394 standard.

13. A method according to any of claims 1 to 12, wherein said standardised video format being one of said standardised MPEG-x, H.26x or JPEG video data formats.

14. A method according to claim 13, wherein said decoding step of said display device (12) and/or said encoding step being able to de-/encode a plurality of different ones of said standardized video formats.

15. A car navigation system for generating navigation information and transmitting said navigation information for display to a display device (12), the car navigation system comprising a navigation processor (10) for transmitting said navigation information to said display device (12) in form of video data in accordance with a standardised video format
**characterised by further comprising**
an encoder (22) for encoding the navigation information for transmission to said display device (12), said encoder (22) encoding said navigation information in form of video data in accordance with said standardized video format.

16. A car navigation system according to claim 15, further comprising a memory for storing predetermined encoded navigation information, said stored encoded navigation information being in form of video data in accordance with a standardized video format.

17. A car navigation system according to claim 16, wherein said memory being a record carrier (11).

18. A car navigation system according to claim 17, wherein said record carrier (11) being a DVD, a CD-ROM, or a Flash-memory.

19. A car navigation system according to any of claims 15 or 18, further comprising a receiver (21) for receiving encoded navigation information, said received encoded navigation information being in form of video data in accordance with a standardized video format.

20. A car navigation system according to any of claims 16 to 19, further comprising a navigation processor (10) for retrieving encoded navigation information from said received or stored navigation information.

21. A car navigation system according to claim 20, wherein said navigation processor (10) transmitting said retrieved navigation information to said display device (12).

22. A car navigation system according to any of claims 16 to 20, further comprising a decoder (20) for decoding said received or stored navigation information.

23. A car navigation system according to any of claims 19 to 22, wherein said car navigation system being connected to a wireless communication link (16).

24. A car navigation system according to any of claims 15 to 23, further comprising a communication network (17) for transmission of said encoded navigation information to said display device (12).

25. A car navigation system according to claim 24, wherein said communication network (17) being in accordance with the MOST standard or the IEEE1394 standard.

26. A car navigation system according to any of claims 15 to 25, wherein said standardised video format being one of said standardised MPEG-x, H.26x or JPEG video formats.

27. A car navigation system according to any of claims 25 to 26, wherein said encoder (22) being able to encode a plurality of different ones of said standardized video formats.

## Patentansprüche

1. Verfahren zum zur Verfügung stellen von Navigationsinformation auf einem Anzeigegerät (12) eines Fahrzeugs, wobei das Verfahren Navigationsinformation erzeugt, die Navigationsinformation an das Anzeigegerät (12) überträgt und die Navigationsinformation auf dem Anzeigegerät (12) anzeigt, wobei der Übertragungsschritt die Navigationsinformation in Form von Videodaten gemäß eines standardisierten Videoformats überträgt,
**dadurch gekennzeichnet, dass**
der Schritt der Erzeugung der Navigationsinformation den Schritt zur Kodierung der Navigationsinformation für die Übertragung an das Anzeigegerät (12) umfasst, wobei der Kodierschritt kodierte Navigationsinformation in Form von Videodaten gemäß dem standardisierten Videoformat erzeugt; und des Weiteren durch den Schritt
Dekodieren der am Anzeigegerät (12) empfangenen Navigationsinformation, bevor sie auf dem Anzeigegerät (12) angezeigt wird.

2. Verfahren nach Anspruch 1, des Weiteren umfassend den Schritt des Speicherns vorbestimmter kodierter Navigationsinformation vorab in einem Speicher, wobei der Schritt der Erzeugung der Navigationsinformation den Schritt des Abrufens kodierter Navigationsinformation von dem Speicher umfasst, wobei die gespeicherte kodierte Navigationsinformation in Form von Videodaten gemäß eines standardisierten Videoformats vorliegt.

3. Verfahren nach Anspruch 2, wobei die abgerufene Navigationsinformation an das Anzeigegerät (12) übertragen wird.

4. Verfahren nach Anspruch 2 oder 3, wobei der Speicher ein Datenträger (11) ist.

5. Verfahren nach Anspruch 4, wobei der Datenträger (11) eine DVD, ein CD-ROM oder ein Flash-Speicher ist.

6. Verfahren nach einem der Ansprüche 1 bis 5, des Weiteren umfassend die Schritte des Sendens und Empfangens kodierter Navigationsinformation, wobei die kodierte Navigationsinformation in Form von Videodaten gemäß eines standardisierten Videoformats vorliegt, wobei der Schritt des Erzeugens der Navigationsinformation den Schritt des Abrufens kodierter Navigationsinformation von der empfangenen Navigationsinformation umfasst.

7. Verfahren nach Anspruch 6, wobei die kodierte Navigationsinformation durch einen Serviceprovider (15) übertragen wird.

8. Verfahren nach Anspruch 6 oder 7, wobei die kodierte Navigationsinformation über eine drahtlose Datenübertragungsverbindung (16) übertragen wird.

9. Verfahren nach Anspruch 8, wobei die kodierte Navigationsinformation über die drahtlose Datenübertragungsverbindung (16) gemäß eines standardisierten mobilen Datenübertragungsstandard übertragen wird.

10. Verfahren nach Anspruch 9, wobei der standardisierte mobile Datenübertragungsstandard der UMTS-Standard ist.

11. Verfahren nach einem der Ansprüche 1 bis 10, wobei die kodierte Navigationsinformation über ein Fahrzeugdatenübertragungsnetzwerk (17) an das Anzeigegerät (12) übertragen wird.

12. Verfahren nach Anspruch 11, wobei das Fahrzeugdatenübertragungsnetzwerk (17) dem MOST-Standard oder dem IEEE1394-Standard entspricht.

13. Verfahren nach einem der Ansprüche 1 bis 12, wobei das standardisierte Videoformat eines der standardisierten MPEG-x, H.26x oder JPEG Videodatenformate ist.

14. Verfahren nach Anspruch 13, wobei der Dekodierungsschritt des Anzeigegeräts (12) und/oder der Kodierungsschritt in der Lage ist, eine Mehrzahl der verschiedenen Videoformate zu kodieren/dekodieren.

15. Fahrzeugnavigationssystem zur Erzeugung von Navigationsinformation und Übertragung der Navigationsinformation zur Anzeige an ein Anzeigegerät (12), wobei das Fahrzeugnavigationssystem einen Navigationsprozessor (10) umfasst zur Übertragung der Navigationsinformation an das Anzeigegerät (12) in Form von Videodaten gemäß eines standardisierten Videoformats,
des Weiteren **gekennzeichnet durch**
eine Kodiereinheit (22) zur Kodierung der Navigationsinformation für die Übertragung an das Anzeigegerät (12), wobei die Kodiereinheit (22) die Navigationsinformation in Form von Videodaten gemäß des standardisierten Videoformats kodiert.

16. Fahrzeugnavigationssystem nach Anspruch 15, des Weiteren umfassend einen Speicher zur Speicherung vorbestimmter kodierter Navigationsinformation, wobei die gespeicherte kodierte Navigationsinformation in Form von Videodaten gemäß eines standardisierten Videoformats vorliegt.

17. Fahrzeugnavigationssystem nach Anspruch 16, wobei der Speicher ein Datenträger (11) ist.

18. Fahrzeugnavigationssystem nach Anspruch 17, wobei der Datenträger (11) eine DVD, eine CD-ROM oder ein Flash-Speicher ist.

19. Fahrzeugnavigationssystem nach einem der Ansprüche 15 oder 18, des Weiteren umfassend einen Empfänger (21) für den Empfang kodierter Navigationsinformation, wobei die empfangende kodierte Navigationsinformation in Form von Videodaten gemäß eines standardisierten Videoformats vorliegt.

20. Fahrzeugnavigationssystem nach einem der Ansprüche 16 bis 19, des Weiteren umfassend einen Navigationsprozessor (10) zum Abrufen kodierter Navigationsinformation aus der empfangenen oder gespeicherten Navigationsinformation.

21. Fahrzeugnavigationssystem nach Anspruch 20, wobei der Navigationsprozessor (10) die empfangene Navigationsinformation an das Anzeigegerät (12) überträgt.

22. Fahrzeugnavigationssystem nach einem der Ansprüche 16 bis 20, des Weiteren umfassend eine Dekodiereinheit (20) zur Dekodierung der empfangenen oder gespeicherten Navigationsinformation.

23. Fahrzeugnavigationssystem nach einem der Ansprüche 19 bis 22, wobei das Fahrzeugnavigationssystem mit einer drahtlosen Datenübertragungsverbindung (16) verbunden ist.

24. Fahrzeugnavigationssystem nach einem der Ansprüche 15 bis 23, des Weiteren umfassend ein Datenübertragungsnetzwerk (17) zur Übertragung der kodierten Navigationsinformation an das Anzeigegerät (12).

25. Fahrzeugnavigationssystem nach Anspruch 24, wobei das Datenübertragungsnetzwerk (17) dem MOST-Standard oder dem IEEE1394-Standard entspricht.

26. Fahrzeugnavigationssystem nach einem der Ansprüche 15 bis 25, wobei das standardisierte Videoformat eines der standardisierten MPEG-x, H.26x oder JPEG Videoformate ist.

27. Fahrzeugnavigationssystem nach einem der Ansprüche 25 bis 26, wobei die Kodiereinheit (22) in der Lage ist, eine Mehrzahl der verschiedenen standardisierten Videoformate zu kodieren.

## Revendications

1. Procédé pour fournir de l'information de navigation sur un dispositif d'affichage (12) d'un véhicule, ledit procédé générant de l'information de navigation, transmettant ladite information de navigation audit dispositif d'affichage (12), et affichant ladite information de navigation sur ledit dispositif d'affichage (12), ladite étape de transmission transmettant à ladite information de navigation sous la forme de données vidéos selon un format vidéo normalisé,
**caractérisé en ce que**
ladite étape de générer ladite information de navigation comprend l'étape d'encoder l'information de navigation pour la transmission vers un dispositif d'affichage (12), ladite étape d'encodage générant de l'information de navigation encodée sous la forme de données vidéos selon ledit format vidéo normalisé ; et comprenant en outre l'étape de
décoder l'information de navigation reçue audit dispositif d'affichage (12) avant d'être affichée sur ledit dispositif d'affichage (12).

2. Procédé selon la revendication 1, comprenant en outre l'étape de stocker de l'information de navigation encodée prédéterminée dans une mémoire par avance, et ladite étape pour générer ladite information de navigation comprenant l'étape de retrouver de l'information de navigation encodée depuis ladite mémoire, ladite information de navigation encodée stockée étant sous la forme de données vidéos selon un format vidéo normalisé.

3. Procédé selon la revendication 2, dans lequel ladite information de navigation retrouvée est transmise audit dispositif d'affichage (12).

4. Procédé selon la revendication 2 ou 3, dans lequel ladite mémoire est un support d'enregistrement (11).

5. Procédé selon la revendication 4, dans lequel ledit support d'enregistrement (11) est un DVD, un CD-ROM, ou une mémoire flash.

6. Procédé selon l'une quelconque des revendications 1 à 5, comprenant en outre les étapes de transmettre et de recevoir de l'information de navigation encodée, ladite information de navigation encodée étant sous la forme de données vidéos selon un format vidéo normalisé, dans lequel ladite étape de générer ladite information de navigation comprend l'étape de retrouver de l'information de navigation encodée depuis ladite information de navigation reçue.

7. Procédé selon la revendication 6, dans lequel ladite information de navigation encodée est transmise par un fournisseur de service (15).

8. Procédé selon la revendication 6 ou 7, dans lequel ladite information de navigation encodée est transmise par un lien de communication sans fil (16).

9. Procédé selon la revendication 8, dans lequel ladite information de navigation encodée est transmise sur ledit lien de communication sans fil (16) selon un standard de communication mobile normalisé.

10. Procédé selon la revendication 9, dans lequel ledit standard de communication mobile normalisé est le standard UMTS.

11. Procédé selon l'une quelconque des revendications 1 à 10, dans lequel ladite information de navigation encodée est transmise audit dispositif d'affichage (12) sur un réseau de communication de véhicule (17).

12. Procédé selon la revendication 11, dans lequel ledit réseau de communication de véhicule (17) est conforme à la norme MOST ou à la norme IEEE1394.

13. Procédé selon l'une quelconque des revendications 1 à 12, dans lequel ledit format vidéo normalisé est un desdits formats de données vidéos normalisés MPEG-x, H.26x ou JPEG.

14. Procédé selon la revendication 13, dans lequel ladite étape de décodage dudit dispositif d'affichage (12) et/ou de ladite étape d'encodage est capable de dé-/encoder une pluralité de différents formats parmi lesdits formats vidéos normalisés.

15. Système de navigation pour voiture pour générer de l'information de navigation et transmettre ladite information de navigation à afficher sur un dispositif d'affichage (12), le système de navigation de véhicule comprenant un processeur de navigation (10) pour transmettre ladite information de navigation audit dispositif d'affichage (12) sous la forme de données vidéos selon un format vidéo normalisé
**caractérisé en ce qu'**il comprend en outre
un encodeur (22) pour encoder l'information de navigation pour sa transmission audit dispositif d'affichage (12), ledit encodeur (22) encodant ladite information de navigation sous la forme de données vidéos selon ledit format vidéo normalisé.

16. Système de navigation pour voiture selon la revendication 15, comprenant en outre une mémoire pour stocker de l'information de navigation encodée prédéterminée, ladite information de navigation encodée stockée étant sous la forme de données vidéos selon un format vidéo normalisé.

17. Système de navigation pour voiture selon la revendication 16, dans lequel ladite mémoire est un support d'enregistrement (11).

18. Système de navigation pour voiture selon la revendication 17, dans lequel ledit support d'enregistrement (11) est un DVD, un CD-ROM, ou une mémoire flash.

19. Système de navigation pour voiture selon l'une quelconque des revendications 15 à 18, comprenant en outre un récepteur (21) pour recevoir de l'information de navigation encodée, ladite information de navigation encodée reçue étant sous la forme de données vidéos selon un format vidéo normalisé.

20. Système de navigation pour voiture selon l'une quelconque des revendications 16 à 19, comprenant en outre un processeur de navigation (10) pour retrouver de l'information de navigation encodée depuis ladite information de navigation reçue ou stockée.

21. Système de navigation pour voiture selon la revendication 20, dans lequel ledit processeur de navigation (10) transmet ladite information de navigation retrouvée audit dispositif d'affichage (12).

22. Système de navigation pour voiture selon l'une quelconque des revendications 16 à 20, comprenant en outre un décodeur (20) pour décoder ladite information de navigation reçue ou stockée.

23. Système de navigation pour voiture selon l'une quelconque des revendications 19 à 22, dans lequel ledit système de navigation pour voiture est connecté à un lien de communication sans fil (16).

24. Système de navigation pour voiture selon l'une quelconque des revendications 15 à 23, comprenant en outre un réseau de communication (17) pour la transmission de ladite information de navigation encodée audit dispositif d'affichage (12).

25. Système de navigation pour voiture selon la revendication 24, dans lequel ledit réseau de communication (17) est conforme à la norme MOST ou à la norme IEEE1394.

26. Système de navigation pour voiture selon l'une quelconque des revendications 15 à 25, dans lequel ledit format vidéo normalisé est un desdits formats de données vidéos normalisés MPEG-x, H.26x ou JPEG.

27. Système de navigation pour voiture selon l'une quelconque des revendications 25 à 26, dans lequel ledit encodeur (22) est capable d'encoder une pluralité de différents formats vidéos parmi lesdits formats vidéos normalisés.
